# EUROPÄISCHE PATENTSCHRIFT

(11) **EP 3 701 233 B1**
(45) Veröffentlichungstag und Bekanntmachung des Hinweises auf die Patenterteilung: **23.03.2022**
(21) Anmeldenummer: 18807856.2
(22) Anmeldetag: 22.10.2018
(51) Int. Cl.: G01G 19/393, B65B 57/14

(54) **FREMDKÖRPERERKENNUNG IN EINER MEHRKOPFWAAGE**
FOREIGN BODY DETECTION IN A COMBINATION WEIGHER
RECONNAISSANCE D'UN CORPS ÉTRANGER DANS UNE BALANCE À TÊTES MULTIPLES

(30) Priorität: 24.10.2017 DE 102017124895
(43) Veröffentlichungstag der Anmeldung: 02.09.2020
(73) Patentinhaber: CLK GmbH, 48341 Altenberge (DE)
(72) Erfinder: CRUSE, Carsten, 48249 Dülmen (DE); DABRINGHAUS, Christian, 48159 Münster (DE); HAASE, Hendrik, 48149 Münster (DE); BELZ, Sebastian, 48161 Münster (DE); BIEFANG, Matthias, 48147 Münster (DE)
(74) Vertreter: RCD Patent Giesen, Schmelcher & Griebel Patentwanwälte PartG mbB
(86) Internationale Anmeldenummer: PCT/DE2018/100862
(87) Internationale Veröffentlichungsnummer: WO 2019/080966

(56) Entgegenhaltungen:
- EP-A1- 2 634 546
- EP-A1- 2 827 114
- WO-A1-2006/129391
- DE-A1-102011 075 607
- US-A1- 2014 238 754
- US-A1- 2015 226 600

## Beschreibung

Die Erfindung betrifft eine Anordnung zur Fremdkörpererkennung in einer Mehrkopfwaage sowie eine Fremdkörpererkennungsvorrichtung für eine Mehrkopfwaage.

### Stand der Technik

Mehrkopfwaagen oder Teilmengenwaagen sind aus dem Stand der Technik zur schnellen Abfüllung von Schüttgut in vorgegebenen Mengen oder Mengenverhältnissen bekannt. Speziell in der Lebensmittelindustrie werden sie häufig zur Abfüllung von Lebensmitteln in Dosen, Becher, Tüten oder ähnliche Verpackungsbehältnisse verwendet.

In einer geläufigen Ausführungsform, wie beispielsweise in der EP 2 634 546 A1 beschrieben, weist eine Mehrkopfwaage eine Vielzahl von kreisförmig über einem Trichter angeordnete Wiegebehälter auf, welche mit dem abzufüllenden Schüttgut gefüllt sind. Über die Wiegebehälter wird die Masse des darin befindlichen Schüttguts erfasst und durch eine Auswertelogik werden diejenigen Wiegebehälter bestimmt, deren Inhalt beispielsweise in Summe einer vorgegebenen Gesamtmenge am nächsten kommt. Diese Wiegebehälter werden in den darunter befindlichen Trichter zur Abfüllung des Verpackungsbehältnisses entleert.

Das Dokument EP2827114 offenbart eine Anordnung zur Fremdkörpererkennung in einer Mehrkopfwaage gemäß dem Stand der Technik.

Aufgrund der Hygieneanforderungen werden derartige Mehrkopfwaagen zumeist kompakt und geschlossen ausgeführt.

### Offenbarung der Erfindung

Aufgabe der vorliegenden Erfindung ist die Angabe einer verbesserten Mehrkopfwaage.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß vorgesehen ist eine Anordnung zur Fremdkörpererkennung in einer Mehrkopfwaage, wobei die Mehrkopfwaage eine Mehrzahl von Wiegebehältern zum Abfüllen von Schüttgut aufweist, von welchen eine Auswahl auf Anlass eines Auslösesignals in eine oder mehrere, in Form eines Trichters zusammengeführte Schütten entleerbar ist, wobei die Anordnung eine Bildaufnahmeeinheit zur Aufnahme einer Bildserie, eine Beleuchtungseinheit und eine Bildauswerteeinheit zur Abgabe eines Signals bei einer Fremdkörperdetektion in einer Bildserie aufweist, wobei die Bildaufnahmeeinheit wenigstens eine Kamera zur optischen Erfassung des Trichters aufweist, wobei die wenigstens eine Kamera innerhalb oder oberhalb des Trichters angeordnet und eingerichtet ist, zumindest einen Abschnitt der Innenfläche des Trichters zwischen zwei horizontalen Ebenen zu erfassen.

Dabei kann die Bildaufnahmeeinheit vorteilhaft auch eine Mehrzahl von Kameras aufweisen, welche kreuzweise oder ringförmig innerhalb oder oberhalb des Trichters angeordnet und eingerichtet sind, jeweils einen inneren Abschnitt des Trichters optisch zu erfassen, wobei die optisch erfassbaren Abschnitte horizontal derart aneinander grenzen, dass die Innenfläche des Trichters zumindest zwischen zwei horizontalen Ebenen durch die Kameras nahezu vollständig erfassbar ist. Die wenigstens eine Kamera kann, oder auch mehrere Kameras der Bildaufnahmeeinheit können zur Erfassung zumindest jeweils eines Spektralbereichs spezifischer Wellenlänge eingerichtet sein, um unterschiedliche Bestandteile des Schüttguts, insbesondere im Schüttgut enthaltene Fremdkörper, über unterschiedliche Reflektionseigenschaften von Oberfläche und/oder Material differenzieren zu können. So sind beispielsweise Kunststoffe bevorzugt im nahen Infrarotbereich detektierbar.

Eine derartige Anordnung bietet den Vorteil, dass bei einer gewünschten Untersuchung des Schüttguts vor einer Abfüllung in einer kompakten, geschlossenen Verpackungsvorrichtung die Untersuchung nicht einer separaten Analyse zur Detektion von Fremdkörpern unterzogen werden muss, sondern dass die Fremdkörperdetektion in eine Mehrkopfwaage als Teil einer Verpackungsvorrichtung integrierbar ist. Die Fremdkörpererkennung kann vorteilhaft im gewogenen und abzufüllenden Schüttgut erfolgen. Ein Einsatz von mehreren Kameras bietet den Vorteil, dass durch die Bildaufnahmeeinheit bei gleicher Kameraauflösung eine höher aufgelöste und weniger verzerrte Bildserie erzielbar ist. Vorteilhaft sind Bildaufnahmeeinheit und/oder die Beleuchtungseinheit innerhalb der Mehrkopfwaage zwischen den Wiegebehältern oder unterhalb der Wiegebehälter angeordnet. Auf diese Weise kann ein aus hygienischen Gründen geschlossenes System erzielt werden. Während des Abfüllvorgangs, bei welchem das Schüttgut über in Form eines Trichters zusammengeführte Schütten rutscht, bildet es einen Schüttgutstrom aus,

Mit anderen Worten ist also eine Anordnung zur Fremdkörpererkennung im Schüttgutstrom in einer Mehrkopfwaage vorgesehen, mit
- einer Mehrzahl von Wiegebehältern zum Abfüllen von Schüttgut, wobei eine Auswahl von Wiegebehältern durch ein Auslösesignal in eine oder mehrere in Form eines Trichters zusammengeführte Schütten entleerbar ist,
- einer Beleuchtungseinheit, die innerhalb der Mehrkopfwaage, zwischen den Wiegebehältern oder unterhalb der Wiegebehälter angeordnet ist,
- einer Bildaufnahmeeinheit,zur Aufnahme einer Bildserie mit wenigstens einer Kamera, die innerhalb oder oberhalb des Trichters angeordnet ist und die eingerichtet ist, das Schüttgut in einem Abschnitt der Innenfläche des Trichters zwischen zwei horizontalen Ebenen zu erfassen, und
- einer Bildauswerteeinheit zur Abgabe eines Signals bei der Erfassung eines Fremdkörpers in der aufgenommenen Bildserie.

Dabei nutzt die Erfindung den Umstand, dass das Schüttgut während des Abfüllvorgangs, bei welchem das Schüttgut über in Form eines Trichters zusammengeführte Schütten rutscht, nach einem kurzen Fall aus dem Wiegebehälter durch eine Verteilung auf der Schütte aufgespreizt wird. Vorteilhaft wird die Aufspreizung während des Rutschvorgangs auf der Schütte durch eine noppenartige Ausführung der Oberfläche der Schütte unterstützt. Durch eine Mehrzahl von Kameras ist das Schüttgut in dem Trichter vollständig erfassbar, in dem die Kameras einen vorgebbaren Höhenabschnitt innerhalb des Trichters vollständig erfassen. Somit ist ein Fremdkörper innerhalb des Schüttguts erfassbar, während es diesen Höhenabschnitt innerhalb des Trichters passiert. Ein innerer Höhenabschnitt des Trichters ist durch mehrere Kameras abschnittsweise erfassbar, indem die einzelnen Kameras horizontal aneinander angrenzende Abschnitte zwischen zwei horizontalen Ebenen des Trichters erfassen. Dazu sind die Kameras kreuzweise, in Form eines Rings, oder der Form des Trichters entsprechend, innerhalb oder oberhalb, beispielsweise entlang des Rands des Trichters angeordnet, wobei der Trichter auch als Dreieck, Viereck bzw. Vieleck ausgebildet sein kann.

Weiterhin vorteilhaft ist die Beleuchtungseinheit flach, insbesondere in Form einer Beleuchtungsscheibe, ausgeführt. Vorteilhaft gibt diese Beleuchtungsscheibe ein diffuses oder durch eine Vielzahl von Leuchtmitteln generiertes Licht ab. Dies bietet den Vorteil, dass sie zum einen gut in die Mehrkopfwaage integrierbar ist, und zum anderen den Vorteil, dass durch die Schütten verursachte Reflektionen reduzierbar sind. Vorteilhaft kann die Beleuchtungsscheibe eine Vielzahl von LEDs aufweisen, welche in einem scheibenförmigen Gehäuse spritzwassergeschützt hinter einer gemeinsamen durchsichtigen Scheibe angeordnet sind.

Die Beleuchtungseinheit und/oder die Bildaufnahmeeinheit zur Aufnahme einer Bildserie sind vorteilhaft durch das Auslösesignal auslösbar. Dabei kann die Auslösung von Beleuchtungseinheit und/oder die Bildaufnahmeeinheit um eine vorgebbare, mit der Fallhöhe des Schüttguts korrelierenden Zeit verzögerbar sein. Damit ist die Effizienz der Bildauswerteeinheit zu steigern, da die Bildaufnahme auf einen kurzen Zeitraum und die Bildauswertung auf diejenigen Bilder beschränkt werden kann, welchen während einer Passage des Schüttguts durch den erfassbaren Höhenabschnitt innerhalb des Trichters entstehen. Vorteilhaft umfasst die Bildserie eine Aufnahme von zumindest 6 Bildern in 300ms.

Vorteilhaft ist das Schüttgut auf den Schütten durch die wenigstens eine Kamera unter einem vorgebbaren Winkel, insbesondere zwischen 50 und 90 Grad, erfassbar. Ein derartiger Erfassungswinkel kann beispielsweise 60 Grad betragen.

Weiterhin vorteilhaft befindet sich die von der wenigstens einen Kamera erfassbare Innenfläche des Trichters zwischen den horizontalen Ebenen ungefähr auf einer mittleren Höhe des Trichters. Auf einer mittleren Höhe des Trichters weist das Schüttgut zur Erkennung dessen einzelner Bestandteile die größte Aufspreizung auf, nachdem es zuvor die Wiegeschale in gehäufter Form verlassen hat, und bevor es durch die Form des Trichters erneut zusammengeführt wird.

Weiterhin vorteilhaft ist die Bildauswerteeinheit eingerichtet und konfigurierbar, einen Fremdkörper zu erkennen oder von dem Schüttgut zu unterscheiden und ein Erkennungssignal zu generieren. Zur Erkennung der Fremdkörper sind aus dem Stand der Technik bekannte Auswerteverfahren verwendbar, wobei der Fremdkörper nach Form und Farbe konfigurierbar sein kann. Die Funktion der Anordnung kann durch ein Testverfahren verifizierbar sein, bei welchem beispielsweise ein definierter Fremdkörper in den von den Kameras erfassbaren Abschnitt des Trichters eingebracht wird. Das Erkennungssignal kann an die Mehrkopfwaage zurückgeführt werden, um beispielsweise einen Abfüllvorgang zu stoppen, ein Warnsignal zu generieren, das Verpackungsbehältnis zu markieren oder das Verpackungsbehältnis zu indizieren.

Erfindungsgemäß vorgesehen ist weiterhin eine Fremdkörpererkennungsvorrichtung für eine Mehrkopfwaage mit einer Mehrzahl von Wiegebehältern zum Abfüllen von Schüttgut, wobei eine Auswahl der Wiegebehälter auf Anlass eines Auslösesignals in eine oder mehrere, in Form eines Trichters zusammengeführte Schütten entleerbar ist, dadurch gekennzeichnet, dass die Fremdkörpererkennungsvorrichtung zur Integration in eine Mehrkopfwaage ausgeführt ist und die Fremdkörpervorrichtung wenigstens eine Kamera aufweist, welche eingerichtet ist, zumindest einen Abschnitt der Innenfläche des Trichters zwischen zwei horizontalen Ebenen zu erfassen.

In einer vorteilhaften Ausgestaltung weist die Fremdkörpererkennungsvorrichtung mehrere Kameras auf, die eingerichtet oder einrichtbar sind, jeweils einen inneren Abschnitt des Trichters optisch zu erfassen, wobei die optisch erfassbaren Abschnitte horizontal derart aneinander angrenzen, dass die Innenfläche des Trichters zumindest zwischen zwei horizontalen Ebenen durch die Kameras nahezu vollständig erfassbar ist.

Eine derartige Fremdkörpererkennungsvorrichtung kann vorteilhaft in eine bestehende Mehrkopfwaage nachgerüstet und beispielsweise in diese integriert werden, um die vorbeschriebene Anordnung zur Fremdkörpererkennung in einer Mehrkopfwaage zu erzielen.

Vorteilhaft kann die Fremdkörpererkennungsvorrichtung Mittel zur Unterstützung der Integration, beispielsweise in Form von Befestigungsmitteln aufweisen.

Weitere vorteilhafte Ausgestaltungen und Installationsvorgaben der Fremdkörpererkennungsvorrichtung sind der vorbeschriebenen Anordnung zur Fremdkörpererkennung in einer Mehrkopfwaage zu entnehmen.

### Zeichnungen

Nachfolgend wird die Erfindung unter Bezugnahme auf die anliegenden, schematischen Zeichnungen anhand einer bevorzugten Ausführungsform näher erläutert.

Es zeigen
- Fig. 1: eine schematische Skizze einer Anordnung zur Fremdkörpererkennung in einer Mehrkopfwaage;
- Fig. 2: eine Seitenansicht einer Fremdkörpererkennungsvorrichtung in einer Mehrkopfwaage;
- Fig. 3: eine Fremdkörpererkennungsvorrichtung in einer Mehrkopfwaage aus einer Sicht von unten.

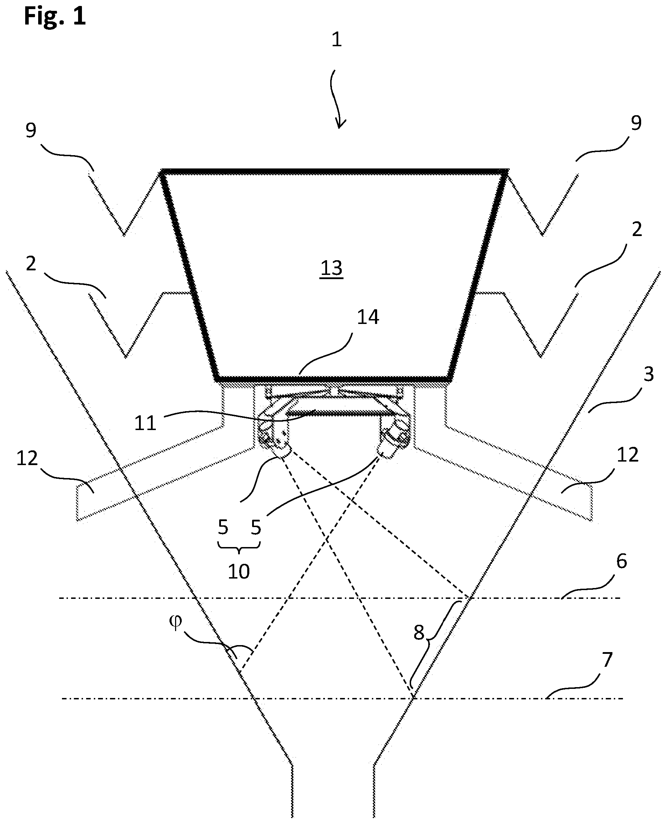

Fig. 1 zeigt eine schematische Skizze einer Anordnung zur Fremdkörpererkennung in einer Mehrkopfwaage 1.

Aus Fig. 1 ist eine Anordnung zur Fremdkörpererkennung in einer Mehrkopfwaage 1 ersichtlich, wobei die Mehrkopfwaage 1 eine Mehrzahl von Wiegebehältern 2 zum Wiegen und Abfüllen von Schüttgut aufweist, von welchen eine Auswahl auf Anlass eines Auslösesignals synchron in eine oder mehrere, in Form eines Trichters 3 zusammengeführte Schütten entleerbar ist. Die Anordnung weist eine Bildaufnahmeeinheit 10 zur Aufnahme einer Bildserie, eine Beleuchtungseinheit 11 und eine Bildauswerteeinheit zur Abgabe eines Signals bei einer Fremdkörperdetektion in einer Bildserie auf, wobei die Bildaufnahmeeinheit 10 eine Mehrzahl von Kameras 5 aufweist. Die Kameras 5 sind kreuzweise oder ringförmig innerhalb oder oberhalb des Trichters 3 angeordnet und eingerichtet, jeweils einen inneren Abschnitt 8 des Trichters 3 optisch zu erfassen. Dabei grenzen die von den Kameras 5 jeweils optisch erfassbaren Abschnitte 8 horizontal derart aneinander, dass die Innenfläche des Trichters 3 zumindest zwischen zwei horizontalen Ebenen 6, 7 durch die Kameras 5 nahezu vollständig erfassbar ist.

Der erfassbare Abschnitt 8 befindet sich auf einer mittleren Höhe des Trichters 5. In einer geläufigen Ausführungsform weist die Mehrkopfwaage 1 zur schnelleren Befüllung der Wiegebehälter 3 über den Wiegebehältern 3 angeordnete Vorratsbehälter 9 auf. Weitere Elemente der Mehrkopfwaage 1 sind der Übersichtlichkeit halber hier nicht dargestellt.

Aus Fig. 1 weiterhin ersichtlich sind die Bildaufnahmeeinheit 10 und die Beleuchtungseinheit 11 innerhalb der Mehrkopfwaage 1 mittig unterhalb der Wiegebehälter 3 angeordnet. Dabei ist die Beleuchtungseinheit 11 flach in Form einer Beleuchtungsscheibe ausgeführt. Die Beleuchtungsscheibe weist die Form eines kurzen Zylinders aus Edelstahl auf, welcher an seinem einen Ende mit einem Edelstahlboden und an seinem anderen Ende mit einer durchsichtigen Scheibe verschlossen ist. Dabei ist der Zylinder über einen Gummiring zwischen Scheibe und Edelstahlwandung gegen das Eindringen von Spritzwasser geschützt. Nicht dargestellt befinden sich hinter der Scheibe Leuchtmittel, beispielsweise in Form von LEDs. Die Kameras 5 der Bildaufnahmeeinheit 10 sind derart angeordnet, dass das Schüttgut auf den Schütten bzw. in dem Trichter 3 unter einem Winkel ϕ von etwa 60 Grad erfassbar ist.

Bildaufnahmeeinheit 10 sowie Beleuchtungseinheit 11 sind mittig unter dem Boden 14 eines inneren Gehäuses 13 der Mehrkopfwaage 1 montiert. Das innere Gehäuse 13 der Mehrkopfwaage 1 wird von Stützen 12 getragen, welche zwischen den den Trichter 3 formenden Schütten hindurchgeführt sind.

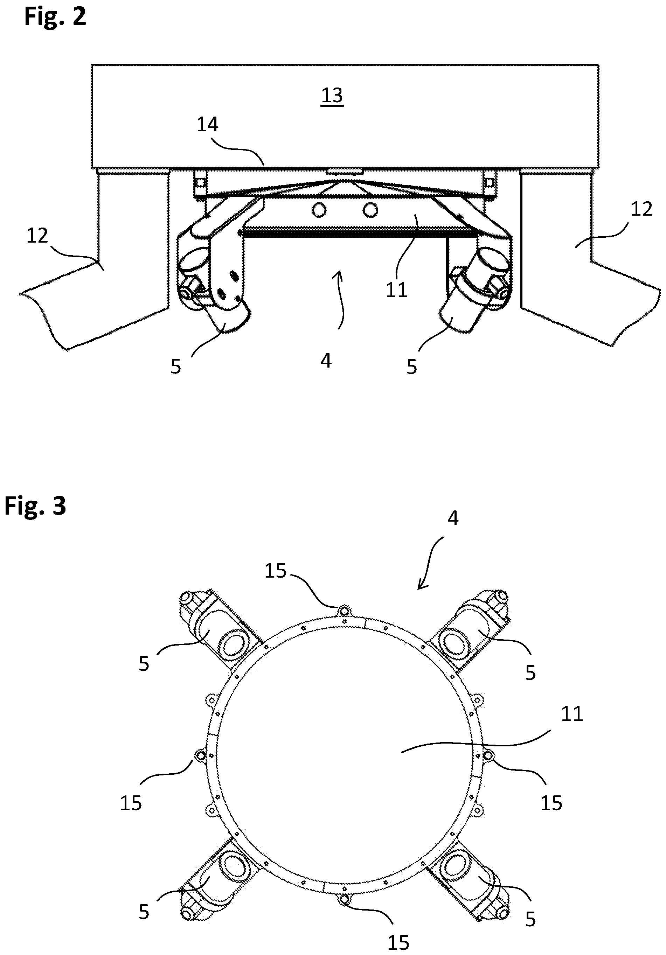

Fig. 2 zeigt eine Seitenansicht einer Fremdkörpererkennungsvorrichtung 4 in einer Mehrkopfwaage 1. Fig. 2 zeigt im Detail die Fremdkörpererkennungsvorrichtung 4, umfassend die Bildaufnahmeeinheit 10 mit Kameras 5 sowie die Beleuchtungseinheit 11. Die Fremdkörpererkennungsvorrichtung 4 ist unterhalb eines inneren Gehäusebodens 14 einer Mehrkopfwaage 1 installiert. Das innere Gehäuse 13 der Mehrkopfwaage 1 wird von den Stützen 12 getragen.

Figur 3 zeigt eine Fremdkörpererkennungsvorrichtung 4 in einer Mehrkopfwaage 1 aus einer Sicht von unten, aus Sicht der Mündung des Trichters 3. Aus Figur 3 ersichtlich weist die Fremdkörpererkennungsvorrichtung 4 Befestigungsmittel 15 zur Befestigung der Fremdkörpererkennungsvorrichtung 4 unter dem Gehäuseboden 14 der Mehrkopfwaage 1 auf.

## Patentansprüche

1. Anordnung zur Fremdkörpererkennung in einer Mehrkopfwaage (1),
mit einer Mehrkopfwaage (1),
wobei die Mehrkopfwaage (1) eine Mehrzahl von Wiegebehältern (2) zum Abfüllen von Schüttgut aufweist, von welchen eine Auswahl auf Anlass eines Auslösesignals in eine oder mehrere, in Form eines Trichters (3) zusammengeführte Schütten entleerbar ist,
**dadurch gekennzeichnet,**
**dass** die Anordnung eine Bildaufnahmeeinheit (10) zur Aufnahme einer Bildserie, eine Beleuchtungseinheit (11) und eine Bildauswerteeinheit zur Abgabe eines Signals bei einer Fremdkörperdetektion in einer Bildserie aufweist,
wobei die Bildaufnahmeeinheit (10) wenigstens eine Kamera (5) zur optischen Erfassung des Trichters (3) aufweist, wobei die wenigstens eine Kamera (5) innerhalb oder oberhalb des Trichters (3) angeordnet und eingerichtet ist, zumindest einen Abschnitt (8) der Innenfläche des Trichters (3) zwischen zwei horizontalen Ebenen zu erfassen.

2. Anordnung nach Anspruch 1, **dadurch gekennzeichnet, dass** die Mehrkopfwaage (1) eine Mehrzahl von Kameras (5) aufweist, welche kreuzweise oder ringförmig innerhalb oder oberhalb des Trichters (3) angeordnet sind, wobei die Kameras (3) eingerichtet sind, jeweils einen inneren Abschnitt (8) des Trichters (3) optisch zu erfassen, wobei die optisch erfassbaren Abschnitte (8) horizontal derart aneinander grenzen, dass die Innenfläche des Trichters (3) zumindest zwischen zwei horizontalen Ebenen durch die Kameras (5) nahezu vollständig erfassbar ist.

3. Anordnung nach Anspruch 1 oder Anspruch 2, **dadurch gekennzeichnet, dass** die Bildaufnahmeeinheit (10) und/oder die Beleuchtungseinheit (11) innerhalb der Mehrkopfwaage (1) zwischen den Wiegebehältern (2) oder unterhalb der Wiegebehälter (2) angeordnet sind.

4. Anordnung nach einem der vorherigen Ansprüche, **dadurch gekennzeichnet, dass** die Beleuchtungseinheit (11) flach ausgeführt ist.

5. Anordnung nach einem der vorherigen Ansprüche, **dadurch gekennzeichnet, dass** die Beleuchtungseinheit (11) in Form einer Beleuchtungsscheibe, ausgeführt ist.

6. Anordnung nach einem der vorherigen Ansprüche, **dadurch gekennzeichnet, dass** die Beleuchtungseinheit (11) und/oder die Bildaufnahmeeinheit (10) zur Aufnahme einer Bildserie durch das Auslösesignal auslösbar sind.

7. Anordnung nach einem der vorherigen Ansprüche, **dadurch gekennzeichnet, dass** das Auslösesignal für die Auslösung von Beleuchtungseinheit (11) und/oder die Bildaufnahmeeinheit (10) um eine vorgebbare, mit der Fallhöhe des Schüttguts korrelierende Zeit verzögerbar ist.

8. Anordnung nach Anspruch 6, **dadurch gekennzeichnet, dass** die Bildserie eine Aufnahme von zumindest 6 Bildern in 300ms umfasst.

9. Anordnung nach einem der vorherigen Ansprüche, **dadurch gekennzeichnet, dass** das Schüttgut auf den Schütten von der wenigstens einen Kamera (5) unter einem Winkel ϕ von etwa 60 Grad erfassbar ist.

10. Anordnung nach einem der vorherigen Ansprüche, **dadurch gekennzeichnet, dass** sich die von der wenigstens einer Kamera (5) erfassbare Innenfläche des Trichters (3) zwischen den horizontalen Ebenen auf einer mittleren Höhe des Trichters (3) befindet.

11. Fremdkörpererkennungsvorrichtung (4) zur Nachrüstung in eine Mehrkopfwaage (1) mit einer Mehrzahl von Wiegebehältern (2) zum Abfüllen von Schüttgut, wobei eine Auswahl der Wiegebehälter (2) auf Anlass eines Auslösesignals in eine oder mehrere, in Form eines Trichters (3) zusammengeführte Schütten entleerbar ist, **dadurch gekennzeichnet, dass** die Fremdkörpererkennungsvorrichtung (4) zur Integration in eine Mehrkopfwaage (1) ausgeführt ist und die Fremdkörpervorrichtung (4) wenigstens eine Kamera (4) aufweist, welche eingerichtet ist, zumindest einen Abschnitt (8) der Innenfläche des Trichters (3) zwischen zwei horizontalen Ebenen zu erfassen.

## Claims

1. Assembly for detection of foreign bodies in a multihead weigher (1),
with a multihead weigher (1),
wherein the multihead weigher (1) features a plurality of weighing containers (2) for filling with bulk material, whereat a selection of this can be emptied into one or into a plurality of chutes combined in the shape of a funnel (3) upon arrival of a trigger signal,
**characterized in that**
the device features an image recording unit (10) for recording of an image series, a lighting unit (11) and an image evaluation unit for output of a signal upon detection of a foreign body in an image series,
wherein the image recording unit (10) features at least one camera (5) for optical capturing of the funnel (3), wherein the at least one camera (5) is arranged inside of or above the funnel (3) and is set up to capture at least one section (8) of the interior surface of the funnel (3) between two horizontal planes.

2. Assembly according to claim 1, **characterized in that** the multihead weigher (1) features a plurality of cameras (5) which are arranged cross-wise or in a ring shape inside of or above the funnel (3), wherein the cameras (5) are set up so that each one optically captures an interior section (8) of the funnel (3), wherein the optically capturable sections (8) adjoin each other horizontally such that the interior surface of the funnel (3) is nearly completely captured by the cameras (5) at least between two horizontal planes.

3. Assembly according to claim 1 or claim 2, **characterized in that** the image recording unit (10) and/or the lighting unit (11) are arranged inside of the multihead weigher (1) between the weighing containers (2) or underneath the weighing containers (2).

4. Assembly according to one of the preceding claims, **characterized in that** the lighting unit (11) is of a flat design.

5. Assembly according to one of the preceding claims, **characterized in that** the lighting unit (11) is designed in the form of a lighting disk.

6. Assembly according to one of the preceding claims, **characterized in that** the lighting unit (11) and/or the image recording unit (10) can be triggered by the trigger signal for recording of the image series.

7. Assembly according to one of the preceding claims, **characterized in that** the trigger signal for triggering of the lighting unit (11) and/or of the image recording unit (10) can be delayed by a predetermined time that correlates with the drop height of the bulk material.

8. Assembly according to claim 6, **characterized in that** the image series comprises a recording of at least 6 images in 300 ms.

9. Assembly according to one of the preceding claims, **characterized in that** the bulk material on the chutes can be captured by the at least one camera (5) at an angle φ of about 60 degrees.

10. Device according to one of the preceding claims, **characterized in that** the interior surface of the funnel (3) capturable by the at least one camera (5) is located between the horizontal planes at a medium height of the funnel (3).

11. A foreign body detection apparatus (4) for a multihead weigher (1) with a plurality of weighing containers (2) for filling with bulk material, wherein upon arrival of a trigger signal the weighing containers (2) can be emptied into one or into a plurality of chutes combined in the shape of a funnel (3), **characterized in that** the foreign body detection apparatus (4) is designed for integration into a multihead weigher (1), and the foreign body apparatus (4) features at least one camera (4) which is set up to capture at least one section (8) of the interior surface of the funnel (3) between two horizontal planes.

## Revendications

1. 1 Disposition du système d'identification de corps étrangers dans une peseuse multi-têtes (1), avec une peseuse multi-têtes (1),
alors que la peseuse multi-têtes (1) est munie de nombreux récipients de pesage (2) que l'on remplit avec des objets en vrac, alors que certains d'entre eux peuvent être vidés après avoir été sélectionnés suite au déclenchement d'un signal, dans une ou plusieurs goulottes rassemblées pour prendre la forme d'un entonnoir (3),
et qui se **caractérise par le fait que**
la disposition d'une unité de prise de clichés (10) permettant de prendre une série de clichés est munie d'une unité d'éclairage (11) et d'une unité d'évaluation des images permettant d'émettre un signal lorsqu'un corps étranger est détecté dans une série de clichés,
alors que cette unité de prise de clichés (10) est munie d'au moins une caméra (5) permettant l'examen optique de l'entonnoir (3), alors qu'au moins une caméra (5) est installée à l'intérieur ou au-dessus de l'entonnoir (3) et placée de manière à examiner au moins une portion (8) de la surface interne de l'entonnoir (3), entre deux niveaux horizontaux.

2. Disposition conforme à la revendication 1, **se caractérisant par le fait que** la peseuse multi-têtes (1) est munie de nombreuses caméras (5) disposées en croix ou en cercle à l'intérieur ou au-dessus de l'entonnoir (3), alors que les caméras (3) sont installées de manière à examiner visuellement à chaque fois une portion interne (8) de l'entonnoir (3), alors que les portions examinables visuellement (8) sont délimitées horizontalement entre elles les unes par rapport aux autres de sorte que la surface interne de l'entonnoir (3) puisse être presque intégralement examinée par les caméras (5) au moins entre deux niveaux horizontaux.

3. Disposition conforme à la revendication 1 ou à la revendication 2 **caractérisée par le fait que** l'unité de prise de clichés (10) et/ou l'unité d'éclairage (11) sont installées à l'intérieur de la peseuse multi-têtes (1) entre les récipients de pesage (2) ou en-dessous des récipients de pesage (2).

4. Disposition conforme à l'une des revendications précédentes **caractérisée par le fait que** l'unité d'éclairage (1) est installée à plat.

5. Disposition conforme à l'une des revendications précédentes **caractérisée par le fait que** l'unité d'éclairage (11) est installée de manière à prendre la forme d'un disque d'éclairage.

6. Disposition conforme à l'une des revendications précédentes **caractérisée par le fait que** l'unité d'éclairage (11) et/ou l'unité de prise de clichés (10) peuvent être activées par un signal de déclenchement afin de prendre une série de clichés.

7. Disposition conforme à l'une des revendications précédentes **caractérisée par le fait que** le signal de déclenchement permettant d'activer l'unité d'éclairage (11) et/ou l'unité de prise de clichés (10) peut être retardé d'une durée définie en corrélation avec la hauteur de chute des objets en vrac.

8. Disposition conforme à la revendication 6 **caractérisée par le fait que** la série de clichés est le résultat de la prise d'au moins 6 images en 300 ms.

9. Disposition conforme à l'une des revendications précédentes **caractérisée par le fait que** les objets en vrac situés sur la goulotte peuvent être examinés par au moins une caméra (5) sous un angle φ d'environ 60 degrés.

10. Disposition conforme à l'une des revendications précédentes **caractérisée par le fait que** la surface interne de l'entonnoir (3) pouvant être examinée par au moins une caméra (5) se trouve entre les niveaux horizontaux à mi-hauteur de l'entonnoir (3).

11. Dispositif d'identification de corps étrangers (4) qui rééquipe une peseuse multi-têtes (1) munie de nombreux récipients de pesage (2) que l'on remplit avec des objets en vrac, alors que certains récipients de pesage (2) peuvent être vidés après avoir été sélectionnés suite au déclenchement d'un signal, dans une ou plusieurs goulottes rassemblées pour prendre la forme d'un entonnoir (3), et qui se **caractérise par le fait que** le dispositif d'identification de corps étrangers (4) est prévu pour être intégré à une peseuse multi-têtes (1) et **par le fait que** le dispositif d'identification de corps étrangers (4) est muni d'au moins une caméra (4) placée de manière à examiner au moins une portion (8) de la surface interne de l'entonnoir (3), entre deux niveaux horizontaux.
